# EUROPÄISCHE PATENTANMELDUNG

(11) **EP 1 862 299 A1**
(43) Veröffentlichungstag der Anmeldung: **05.12.2007**
(21) Anmeldenummer: 07007934.8
(22) Anmeldetag: 19.04.2007
(51) Int. Cl.: B32B 27/32, B65D 77/20, B32B 27/34, B32B 27/36

(54) **Deckelverbundfolie, Verfahren zu deren Herstellung und Verwendung bei einer Verpackungseinheit**

(30) Priorität: 02.06.2006 DE 102006026306
(71) Anmelder: Wipak Walothen GmbH, 29699 Bornlitz (DE)
(72) Erfinder: Sperlich, Dr. Bernd, 29664 Walsrode (DE); Richards Jaquie, 29644 Walsrode (DE); Marter , Michael, 29614 Soltau (DE)
(74) Vertreter: Läufer, Martina

(57) **Zusammenfassung**

Verpackungsverbundfolien, die häufig bedruckt sind und ein ansprechendes Äußeres besitzen sollen, werden in der Regel ganzflächig mit Siegelschichten aus nicht gereckten Polyolefinblasfolien versehen, wenn an der betreffenden Oberfläche innerhalb des Verpackungsverbundes eine Siegelung mit einem anderem Verpackungsteil erforderlich ist. Durch die übliche Siegelfolie geht die optische Brillanz leicht verloren. Um eine insgesamt optisch transparente und im Druck brillante Verpackungsfolie zu erhalten, wird vorgeschlagen, dass als Siegelschicht eine mono- oder biaxial gereckte polypropylenbasierte Folie ausgewählt wird, die einen gegenüber der Trägerfolie um wenigsten 10 °C niedrigeren Schmelzpunkt oder Schmelzbereich aufweist.

## Beschreibung

Die Erfindung betrifft eine Verbundfolie mit einer Trägerfolie aus einer mono- oder biaxial gereckten, in sich transparenten Polymerfolie und einer außen liegenden Siegelschicht, eine Verpackungseinheit aus einer tiefgezogenen Verpackungsschale und einer Deckelfolie aus dieser Verbundfolie, die Verwendung der Verbundfolie bei gesiegelten Verpackungen allgemein sowie ein Verfahren zur Herstellung der Verbundfolie.

Einseitig siegelbare Verbundfolien für Verpackungsdeckel bestehen üblicherweise wenigstens aus einem mechanischen Festigkeitsträger, der gleichzeitig als Druckträger dienen kann, und einer äußeren Siegelschicht. Derartige Verpackungsdeckel werden beispielsweise zum Verschließen tiefgezogener Schalen verwendet, können jedoch auch an anderen Verpackungseinheiten eingesetzt werden, beispielsweise als zusätzliche Außenhaut oder Einschlagfolie. Der Festigkeitsträger besteht meistens aus einer mono- oder biaxial gereckten Folie, beispielsweise aus Polyester, Polyolefinen wie insbesondere Polypropylen oder Polyamid. Auf diese Weise kann der Deckelfolie genügend mechanische Festigkeit verliehen werden. Gegebenenfalls wird der Träger konterbedruckt; dies ist möglich, da die genannten Polymerfolien in sich transparent sind. Die Siegelschicht wird im Allgemeinen separat als Blasfolie hergestellt und auf den Druck- und Festigkeitsträger mittels Klebstoff kaschiert. Sehr häufig besteht die Siegelfolie aus Polyethylen oder Polypropylen und besitzt als Blas- oder Castfolie eine Dicke zwischen ca. 10 und 60 µm.

In den meisten Fällen sollen Verpackungs-Verbundfolien - und gerade solche für Schalendeckel - bedruckt werden, um dem Kunden verschiedene Informationen, u.a. zum Packungsinhalt, zu vermitteln und der Verpackung ein ansprechendes Äußeres zu geben. Der Druck wird dabei gerne als Konterdruck hinter einer hochtransparenten gereckten Trägerfolie ausgeführt. Auf diese Weise kann das Druckbild nicht von außen beschädigt oder gefälscht werden. Die Druckschicht wird durch die aus technischen Gründen ganzflächig aufgebrachte, zum Verpackungsinneren weisende Siegelschicht abgedeckt. Bei den allgemein üblichen Siegelschichten aus Polyolefin-Blasfolien besitzt der Verbund insgesamt eine unbefriedigende Transparenz. Die optische Brillianz der gereckten Trägerfolie geht durch das niedrig schmelzende, molekular ungeordnete Siegelschichtpolymer verloren. Die Siegelschicht wird jedoch ganzflächig benötigt, da es bei vernünftigem technischen Aufwand nicht möglich ist, die Siegelschicht nur in dem benötigten Randbereich aufzubringen.

Der Erfindung lag daher die Aufgabe zugrunde, eine Verpackung mit einem Folienverbund aus einer optisch transparenten Trägerschicht und einer Siegelschicht zur Verfügung zu stellen, der einseitig siegelbar bleibt und dabei in unbedruckten Flächenbereichen eine verbesserte Transparenz sowie in transparent bedruckten Flächenbereichen eine bessere optische Brillianz zeigt.

Zur Lösung dieser Aufgabe ist eine Verbundfolie mit einer Trägerfolie aus einer mono- oder biaxial gereckten, transparenten Polymerfolie und einer außenliegenden Siegelschicht vorgesehen, bei welcher die Siegelschicht eine mono- oder biaxial gereckte polypropylenbasierte Folie (d.h. eine sogenannte MOPP- oder vorzugsweise eine BOPP-Folie) mit einem gegenüber der Trägerfolie niedrigeren Schmelzpunkt oder -bereich ist.

Vorzugsweise liegt der Schmelzpunkt oder die Untergrenze des Schmelzbereichs des Siegelschichtpolymers wenigstens 10 °C, weiter vorzugsweise wenigstens 20 °C unter dem Schmelzpunkt oder unter der Untergrenze des Schmelzbereichs des Trägerfolienpolymers.

Mono- oder biaxial gereckte Folien zeigen im Allgemeinen eine gute optische Transparenz im Vergleich zu entsprechenden nicht gereckten Folien, was sowohl auf der geänderten Ausrichtung in molekularer Ebene als auch auf der geringeren Schichtdicke beruht. Sie werden jedoch nicht als Siegelschichten verwendet, da für den Siegelvorgang die weichere, aufgrund des größeren Schmelz- und Erweichungsbereichs leichter zu erschmelzende Konsistenz der "üblichen", nicht ausgerichteten Polymere gewünscht ist.

Im Rahmen der Erfindung wurde nun gefunden, dass es durchaus möglich ist, gereckte polyolefinische Folien als Siegelschichten an Verbundfolien zu verwenden, wenn die Auswahl von Trägerfolie und für die Siegelschicht vorgesehener Folie so geschieht, dass die Schmelzpunkte hinlänglich weit auseinander liegen, um einerseits eine sichere, feste Siegelung und andererseits die mechanische Stabilität der Verbundfolie über den Siegelbereich (insbesondere nach der Siegelung) zu gewährleisten.

Als Siegelschichtfolien werden erfindungsgemäß mono- oder biaxial gereckte polypropylenbasierte Folien verwendet, die besonders vorteilhaft in Kombination mit mono- oder biaxial gereckten Polyesterfolien (z. B. MOPET, BOPET) oder Polyamidfolien (MOPA, BOPA) als Trägerfolien eingesetzt werden können.

Durch die Verwendung der mono- oder biaxial gereckten Polypropylenfolien kann die Transparenz des gesamten Verbundes erheblich gesteigert werden. Ein weiterer Vorteil besteht darin, dass die gereckten Folien ein höheres Schrumpfvermögen aufweisen, was dazu führt, das die Deckelfolien nach dem Siegeln straff auf der Schale aufliegen, was das Erscheinungsbild zusätzlich verbessert. Dies gilt insbesondere dann, wenn der verwendete Druckträger ebenfalls Schrumpfvermögen aufweist.

Die Trägerfolie innerhalb der erfindungsgemäßen Verbundfolie kann vorzugsweise eine Folie aus der Gruppe der polyolefin-, insbesondere polypropylen-, polyamid- und polyesterbasierten Folien sein.

"Basiert" bedeutet hierbei, dass die Folie das genannte Polymer ausschließlich oder aber zum überwiegenden Teil enthält, so dass der Fachmann das "Leitpolymer" als das wesentliche Polymer der Folie ansehen würde. Neben den Polymerisationseinheiten des hauptsächlich vorhandenen Polymers können. andere Einheiten vorhanden sein, d.h. es können Mischungen verschiedener Polymere und/oder Copolymerisate zwischen oder mit anderen Polymeren in der Folie vorliegen. Zum Beispiel können Propylenfolien in untergeordneter Menge andere Polymere, wie insbesondere andere Polyolefine oder auch Polyolefin-Copolymere, vorzugsweise Polyethylen, enthalten. Diese anderen Polymere können eingemischt oder in Form von statistischen oder Blockpolymeren einpolymerisiert sein.

Die Trägerfolie kann außer der Siegelschicht ein oder mehrere weitere Folienschichten tragen, vorzugsweise wenigstens eine Sauerstoffbarriereschicht und/oder eine Haftklebstoffschicht. Die zusätzlichen Schichten können vorzugsweise unterhalb der Siegelschicht oder, je nach Zweck der Schicht, gegebenenfalls auf der gegenüberliegenden Seite der Trägerschicht vorhanden sein.

Die Trägerfolie oder die Siegelschichtfolie kann bedruckt sein. In den meisten Anwendungsfällen wird sie teilflächig bedruckt, so dass ein Fenster vorhanden ist, das eine Ansicht der verpackten Ware zulässt. Die Folie könnte jedoch auch großflächig oder vollflächig mit transparenten Druckfarben bedruckt sein. Auch in diesem Falle wird die optische Druckqualität und Farbbrillianz durch die Transparenz des ganzen Verbundes, wie durch die Erfindung bereitgestellt, verbessert.

Die optisch transparente, gereckte Siegelschicht liegt gegen die gegebenenfalls bedruckte und/oder weitere Schichten tragende Trägerschicht kaschiert oder laminiert vor, d.h. in einem durch Klebstoff (Kaschieren) oder heißes Aufeinanderpressen (klebstofffreies Laminieren) vermittelten Verbund.

Die Polymerschichten können auf diesem Gebiet übliche Additive enthalten In einer bevorzugten Ausführungsform weist die Siegelschicht ein Additiv oder eine Beschichtung zur Verbesserung der Antifogeigenschaften auf. Antifog-Additive oder Beschichtungen sind dem Fachmann auf diesem Gebiet bekannt.

Zur Lösung der Aufgabe umfasst die Erfindung außerdem eine Verpackungseinheit aus einer tiefgezogenen Verpackungsschale und einer Deckelfolie, mit einer deckelseitig außenliegenden polyolefinischen Siegelschicht an der Schale und einer Deckelfolie aus einer Verbundfolie mit einer Trägerschicht und einer schalenseitig außenliegenden polyolefinischen Siegelschicht, wobei die Siegelschichten im Randbereich versiegelt sind und wobei die Deckelfolie der Verpackungseinheit aus einer Verbundfolie nach der Erfindung wie vorstehend beschrieben besteht.

Die Verpackungsschale kann eine übliche Verpackungsschale oder Mulde sein, die beispielsweise insgesamt aus Polypropylen besteht.

In bevorzugter Ausführungsform kann die Verpackungsschale unmittelbar unter der Siegelschicht eine Haftklebeschicht aufweisen. Derartige Haftklebeschichten sind auf dem Gebiet bekannt und werden dazu verwendet, die Verpackung wieder verschließbar zu machen nachdem die Versiegelung aufgerissen wurde, indem der Deckel auf den Schalenrand mit dem freigelegten Haftkleber gedrückt wird.

Die Erfindung umfasst weiterhin die Verwendung der hier beschriebenen, neuen Verbundfolie allgemein als Deckelfolie für eine Verpackungseinheit, insbesondere eine solche wie vorstehend dargestellt, d.h. für eine Schalenverpackung.

Die erfindungsgemäße Verbundfolie kann in an sich bekannter Weise hergestellt werden: Bevorzugt wird die mono- oder biaxial orientierte polypropylenbasierte Siegelschichtfolie - d.h. die zunächst einzeln hergestellte Folie, die an der Verbundfolie als Siegelschicht vorgesehen ist - wie üblich hergestellt und gereckt und dann auf eine ausgewählte mono- oder biaxial gereckte Trägerfolie, oder auf die bereits mit weiteren Folien oder Schichten, wie für den Gesamtverbund gewünscht, verbundene Trägerfolie, aufkaschiert. Hierzu wird die Trägerfolie oder der nur noch um die Siegelschicht zu ergänzende Verbund mit Kaschierklebstoff beschichtet. Auf den Kaschierklebstoff wird die vorgefertigte mono- oder biaxial gereckte Polypropylenschicht aufgelegt. Alternativ kann die Siegelfolie auch unter erhöhtem Druck und erhöhter Temperatur aufgepresst, d.h. auflaminiert werden.

In bevorzugter Weiterbildung der Erfindung kann die Siegelschichtfolie vor dem Recken oder bei mehrfacher Reckung vor dem letzten Recken auf die Trägerfolie laminiert oder kaschiert werden. Hierfür wird die Trägerfolie nur monoaxial gereckt, dann mit der Siegelschicht kaschiert und abschließend erst der zweiten Reckung unterworfen.

Vorzugsweise kann der Folienverbund eine Schicht enthalten, die zu einer höheren Sauerstoffbarriere beiträgt,

Nach einer Ausführungsform der Erfindung ist daher vorgesehen, dass die Trägerfolie mit einer Sauerstoffbarriereschicht bedampft wird, dass eine Sauerstoffbarriereschicht mit der Trägerfolie coextrudiert wird, dass die Trägerfolie mit einer Sauerstoffbarriereschicht lackiert oder beschichtet wird oder dass ein eine Sauerstoffbarriereschicht enthaltender Verbund auf die Trägerfolie laminiert wird, vorzugsweise vor dem Recken oder zwischen Längs- und Querreckung, und bevor auf die Trägerschicht die separat gefertigte Siegelschichtfolie aufgebracht wird.

Alternativ oder zusätzlich kann vorgesehen sein, dass die Siegelschichtfolie mit einer Sauerstoffbarriereschicht bedampft wird, dass eine Sauerstoffbarriereschicht mit der Siegelschichtfolie coextrudiert wird, dass die Siegelschichtfolie mit einer Sauerstoffbarriereschicht lackiert oder beschichtet wird oder dass ein eine Sauerstoffbarriereschicht enthaltender Verbund auf die Siegelschichtfolie laminiert wird, und zwar jeweils vorzugsweise vor dem Recken oder zwischen Längs- und Querreckung, und bevor die Siegelschichtfolie auf die Trägerfolie laminiert oder kaschiert wird.

Die Sauerstoffbarriereschicht kann eine SiOx- oder AlOx-Schicht, eine EVOH-Schicht, eine PVDC oder eine PVOH-Schicht sein.

In entsprechender Weise können andere Schichten, wie z.B. eine separate Feuchtigkeitsbarriereschicht, eingebracht werden.

In bevorzugter Ausführung wird die Trägerfolie oder die Siegelschichtfolie der Verbundfolie vor dem Aufkaschieren oder Auflaminieren der Siegelschichtfolie wenigstens teilflächig bedruckt. Es ist außerdem bevorzugt, dass dies im Konterdruck geschieht, um das Druckbild zu schützen und mit Hilfe des hochtransparenten Verbundes brillianter zu machen, was dem Effekt einer Lackierung entsprechen kann.

Im Folgenden wird die Erfindung anhand von Beispielen näher erläutert. Die Beispiele dienen allein der Illustration. Für den Fachmann ist erkennbar, dass die Erfindung sich nicht auf den Umfang dieser Beisiele beschränkt, sondern auch mit anderen Mitteln im Rahmen der oben gegebenen Beschreibung durchgeführt werden kann, insbesondere mit anderen Polymeren und Polymermischungen.

### BEISPIELE

### Beispiel 1:

Biaxial orientierte PP-Folie (30 µm) kaschiert gegen biaxial orientierte PA-Folie (15 µm)

### Beispiel 2:

Biaxial orientierte PP-Folie (30 µm) kaschiert gegen biaxial orientierte PET-Folie (12 µm)

### Beispiel 3:

Biaxial orientierte PP-Folie mit EVOH (30 µm) kaschiert gegen biaxial orientierte PET-Folie (12 µm).

Auf die BOPP-Folie wurde zwischen Längs- und Querreck eine Verbundfolie aus PP-Copolymer/Haftvermitler/EVOH/Haftvermittler/PP-Copolymer der Dicke 40 µm thermisch aufkaschiert, so dass die Gesamtfolie nach dem Reckprozess 30 µm dick ist (Querreckverhältnis 1:10).

Die PET-Folie wird anschließend auf der EVOH-Seite der BOPP-Folie mit lösungsmittelfreiem Kaschierkleber kaschiert.

### Beispiel 4 (Vergleichsbeispiel):

PP-Blasfolie (30 µm) kaschiert gegen biaxial orientierte PET-Folie (12 µm)

### Beispiel 5 (Vergleichsbeispiel):

CoPP-Blasfolie (4 % Ethylen als Comonomer) (30 µm) kaschiert gegen biaxial orientierte PET-Folie (12 µm)

### Beispiel 6 (Vergleichsbeispiel):

Verbundfolie aus PP-Copolymer/Haftvermitteler/EVOH/Haftvermittler/PP-Copolymer (30 µm) kaschiert gegen biaxial orientierte PET-Folie (12 µm)

Bei allen Beispielen ergab sich eine sehr gute Siegelfestigkeit zu thermogeformten PP-Schalen. Die Beispiele 1 bis 3 zeigten aber eine deutlich geringere Trübung (Die Trübung konnte in allen Fällen um mehr als 25 % verringert werden).

| | Trübung (%) |
|---|---|
| Beispiel 1 | 4,1 |
| Beispiel 2 | 3,8 |
| Beispiel 3 | 4,4 |
| Vergleichsbeispiel 4 | 6,0 |
| Vergleichsbeispiel 5 | 8,0 |
| Vergleichsbeispiel 6 | 6,5 |

## Patentansprüche

1. Verbundfolie mit einer Trägerfolie aus einer mono- oder biaxial gereckten, transparenten Polymerfolie und einer einseitig außenliegenden Siegelschicht, **dadurch gekennzeichnet, dass** die Siegelschicht eine mono- oder biaxial gereckte polypropylenbasierte Folie mit einem gegenüber dem Schmelzpunkt oder Schmelzbereich der Trägerfolie niedrigeren Schmelzpunkt oder Schmelzbereich ist.

2. Verbundfolie nach Anspruch 1, **dadurch gekennzeichnet, dass** die Trägerfolie eine Folie aus der Gruppe der polyolefin-, insbesondere polypropylen-, polyamid- und polyesterbasierten Folien ist.

3. Verbundfolie nach Anspruch 1 oder 2, **dadurch gekennzeichnet, dass** die Trägerfolie ein oder mehrere weitere Folienschichten trägt, vorzugsweise wenigstens eine Sauerstoffbarriereschicht und/oder eine Haftklebstoffschicht

4. Verbundfolie nach einem der Ansprüche 1 bis 3, **dadurch gekennzeichnet, dass** die Trägerfolie oder die Siegelschicht wenigstens teilflächig bedruckt ist.

5. Verbundfolie nach einem der Ansprüche 1 bis 4, **dadurch gekennzeichnet, dass** die Siegelschicht gegen die gegebenenfalls bedruckte und/oder weitere Schichten tragende Trägerfolie kaschiert oder laminiert vorliegt.

6. Verbundfolie nach einem der Ansprüche 1 bis 5, **dadurch gekennzeichnet, dass** die Siegelschicht ein Additiv oder eine Beschichtung zur Verbesserung der Antifogeigenschaften aufweist.

7. Verpackungseinheit aus einer tiefgezogenen Verpackungsschale und einer Deckelfolie, mit einer deckelseitig außenliegenden - polyolefinischen Siegelschicht an der Schale und einer Deckelfolie aus einer Verbundfolie mit einer Trägerschicht und einer schalenseitig außenliegenden polyolefinischen Siegelschicht, wobei die Siegelschichten im Randbereich versiegelt sind, **gekennzeichnet durch** eine Deckelfolie aus einer Verbundfolie nach einem der Ansprüche1 bis 6.

8. Verwendung der Verbundfolie nach einem der Ansprüche 1 bis 6 als Deckelfolie für eine Verpackungseinheit, insbesondere nach einem der Ansprüche 7 bis 9.

9. Verfahren zur Herstellung einer Verbundfolie nach einem der Ansprüche 1 bis 6, **dadurch gekennzeichnet, dass** eine Trägerfolie aus einer mono- oder biaxial gereckten, transparenten Polymerfolie ausgewählt und dass eine mono- oder biaxial gereckte polypropylenbasierte Folie mit einem gegenüber dem Schmelzpunkt oder Schmelzbereich der Trägerfolie niedrigeren Schmelzpunkt oder Schmelzbereich, die separat gefertigt wurde, als Siegelfolie ausgewählt und mit der Trägerfolie verbunden wird.

10. Verfahren nach Anspruch 9, **dadurch gekennzeichnet, dass** die Siegelfolie und die gegebenenfalls bedruckte und/oder weitere Schichten tragende Trägerfolie gegeneinander mit Klebstoff kaschiert oder laminiert werden.

11. Verfahren nach Anspruch 9 oder 10, **dadurch gekennzeichnet, dass** die Trägerfolie mit einer Sauerstoffbarriereschicht bedampft, lackiert oder beschichtet wird, dass eine Sauerstoffbarriereschicht mit der Trägerfolie coextrudiert wird oder dass ein eine Sauerstoffbarriereschicht enthaltender Verbund auf die Trägerfolie laminiert wird, vorzugsweise vor dem Recken oder zwischen Längs- und Querreckung, und bevor auf die Trägerschicht die separat gefertigte Siegelschichtfolie aufgebracht wird.

12. Verfahren zur Herstellung einer Verbundfolie nach einem der Ansprüche 9 bis 11, **dadurch gekennzeichnet, dass** die Siegelschichtfolie mit einer Sauerstoffbarriereschicht bedampft, lackiert oder beschichtet wird, dass eine Sauerstoffbarriereschicht mit der Siegelschichtfolie coextrudiert wird oder dass ein eine Sauerstoffbarriereschicht enthaltender Verbund auf die Siegelschichtfolie laminiert wird, und zwar jeweils vorzugsweise vor dem Recken oder zwischen Längs- und Querreckung, und bevor die Siegelschichtfolie auf die Trägerfolie laminiert oder kaschiert wird.

13. Verfahren zur Herstellung einer Verbundfolie nach einem der Ansprüche 9 oder 12, **dadurch gekennzeichnet, dass** die Sauerstoffbarriereschicht eine SiOₓ- oder AlOₓ-Schicht, eine EVOH-Schicht, eine PVDC- oder eine PVOH-Schicht ist.

14. Verfahren zur Herstellung einer Verbundfolie nach einem der Ansprüche 9 bis 13, **dadurch gekennzeichnet, dass** die Trägerfolie vor dem Kaschieren oder Laminieren mit der Siegelschichtfolie wenigstens teilflächig bedruckt wird.

15. Verfahren zur Herstellung einer Verbundfolie nach einem der Ansprüche 9 bis 14, **dadurch gekennzeichnet, dass** die Siegelschichtfolie vor dem Recken oder bei mehrfacher Reckung vor dem letzten Recken auf die Trägerfolie laminiert oder kaschiert wird.
